# EUROPEAN PATENT APPLICATION

(11) **EP 4 318 743 A1**
(43) Date of publication of application: **07.02.2024**
(21) Application number: 23712436.7
(22) Date of filing: 06.02.2023
(51) Int. Cl.: H01M 50/103

(54) **CASE, BATTERY AND ELECTRIC DEVICE**

(30) Priority: 24.06.2022 CN 202221607867 U
(71) Applicant: Ningde Amperex Technology Ltd., Ningde City, Fujian 352100 (CN); Ningde Amperex Technology Ltd., Ningde City, Fujian Province 352100 (CN)
(72) Inventor: GUO, Peipei, Ningde, Fujian 352100 (CN); YANG, Jianhui, Ningde, Fujian 352100 (CN)
(74) Representative: Icosa
(86) International application number: PCT/CN2023/074535
(87) International publication number: WO 2023/246110

(57) **Abstract**

This application discloses a housing, a battery, and an electric device, where the housing includes a frame and two housing covers, the frame is formed by sequentially connecting at least one connecting member head to tail, and the frame is provided with a pole; the two housing covers are respectively connected to two opposite sides of the frame; and the frame and the two housing covers form a sealed accommodating cavity for accommodating an electrode assembly. This embodiment of this application can simplify processing technology of the housing, improve size processing accuracy of the housing, and reduce manufacturing costs of the housing.

## Description

### TECHNICAL FIELD

This application relates to the field of housing connection technologies, and in particular, to a housing, a battery, and an electric device.

### BACKGROUND

In related technical fields, existing hard-shell batteries (for example, batteries of electronic devices such as mobile phones or watches) generally include a housing, a housing cover, and a pole structure, and housings are manufactured mostly via stamping. However, because the thickness, shape, and size are limited by stamping conditions in most cases, many size designs simply cannot be implemented. Moreover, the material thickness of stamped housings is also limited by molds, which affects the service life of the battery. Mold manufacturing for stamped housings requires a complex craftsmanship and is thus costly, which is not conducive to the rapid implementation of projects. In addition, stamped housing structures have high requirements for the manufacturing process and demand complex craftsmanship and as a result, the manufacturing cost is high.

### SUMMARY

To resolve the foregoing problem, some embodiments of this application provide a housing, a battery, and an electric device, which can simplify processing technology of the housing, improve size processing accuracy of the housing, and reduce manufacturing costs of the housing.

According to a first aspect, an embodiment of this application provides a housing, where the housing includes a frame and two housing covers, the frame is formed by sequentially connecting at least one connecting member head to tail, and the frame is provided with a pole. The two housing covers are respectively connected to two opposite sides of the frame. The frame and the two housing covers form a sealed accommodating cavity for accommodating an electrode assembly.

Based on the foregoing embodiment of this application, when the frame is formed by sequentially connecting at least one connecting member head to tail, the connecting member can be processed more precisely, and the frame can be formed only by bending and splicing the connecting member, so that connection size accuracy is controlled more easily in comparison with that of a stamped housing. In addition, no housing in this application needs to be stamped, no special stamping mold is required, and therefore, there is no decrease in size accuracy caused by a decrease in mold precision. After the frame and the housing cover are connected, a corresponding accommodating cavity for installing the electrode assembly can be formed, thereby implementing a simpler structure and easy size control. In addition, this embodiment of this application can simplify processing technology of the housing, improve size processing accuracy of the housing, and reduce manufacturing costs of the housing.

In some embodiments, the connecting member is provided in a quantity of one, the connecting member has at least one first bending region, and the connecting member is provided with the pole. Each first bending region in this embodiment of this application corresponds to a bending position, and after the at least one first bending region is turned, the head end and the tail end of the connecting member can reach positions to be close to each other, so as to be spliced to form the frame.

In some embodiments, the connecting member has at least one second bending region, and the first bending region and the second bending region are respectively arranged on opposite surfaces of the connecting member. The second bending region in this embodiment of this application can enable the connecting member to be bent in another direction. Specifically, the first bending region and the second bending region can be respectively arranged on opposite surfaces of the connecting member. The structure of the frame can be more diversified through such arrangement, and a frame in a corresponding shape can be arranged as required, to obtain a housing in the corresponding shape.

In some embodiments, the connecting member is provided in a quantity of two. The frame includes a first connecting member and a second connecting member, and head ends and tail ends of the first connecting member and the second connecting member are sequentially connected to form the frame. The first connecting member or the second connecting member is provided with the pole; and each of the first connecting member and the second connecting member has at least two first bending regions. The two connecting members in this embodiment of this application can be spliced end to end to form the frame, thereby reducing length of a single connecting member, further reducing processing difficulty, and reducing overall processing costs.

In some embodiments, the first connecting member further has at least one second bending region, and the first bending region and the second bending region are respectively arranged on opposite surfaces of the first connecting member; and/or the second connecting member further has at least one third bending region, and the first bending region and the third bending region are respectively arranged on opposite surfaces of the second connecting member. The second bending region in this embodiment of this application can ensure that the first connecting member has a region with a bending direction opposite to that of the first bending region, so that the first connecting member can have more varied shapes and be applicable to more electrode assemblies with complex shapes; and the third bending region can ensure that the second connecting member has a region with a bending direction opposite to that of the first bending region, so that the second connecting member can have more varied shapes and be applicable to more electrode assemblies with complex shapes.

In some embodiments, the first connecting member further has at least one fourth bending region, and the fourth bending region and the second bending region are respectively arranged on opposite surfaces of the first connecting member; and/or the second connecting member further has at least one fifth bending region, and the fifth bending region and the third bending region are respectively arranged on opposite surfaces of the second connecting member. In this embodiment of this application, the fourth bending region and the fifth bending region are arranged, so that the frame can form an invert T or hollowed-out structure. Therefore, the structure of the frame can be more diversified.

In some embodiments, at least one of the first bending region to the fifth bending region has one of an acute angle, an obtuse angle, a right angle, or a round corner. Five bending regions of the first bending region to the fifth bending region in this embodiment of this application may have one bending structure of the acute angle, the obtuse angle, the right angle, or the round corner. With the foregoing structure, the frame can accommodate electrode assemblies in more complex shapes, and the bending regions of the frame may be configured in the foregoing shapes as required.

In some embodiments, the frame is in a shape of one of a triangle, a sector, a circle, an ellipse, a regular shape with 4 or more sides, and an irregular shape with 4 or more sides. The shape of the frame in this embodiment of this application can define shape of the entire housing. The shape of the frame can be more diversified through the foregoing structure, so that the frame is applicable to electrode assemblies in more complex shapes.

In some embodiments, the connecting member is a metal sheet. After the metal sheet is configured as the connecting member in this embodiment of this application, the connecting member of the same thickness can have higher strength. Specifically, the connecting member may be a conventional steel sheet, a stainless steel sheet, an iron sheet, a copper sheet, an alloy sheet, or the like.

In some embodiments, a thickness of both the connecting member and the housing cover is greater than or equal to 0.05 mm. After the thickness of both the connecting member and the housing cover in this embodiment of this application is greater than or equal to 0.05 mm, the connecting member and the housing cover can have sufficient strength.

According to a second aspect, an embodiment of this application provides a battery including an electrode assembly and the foregoing housing, where the electrode assembly is arranged in an accommodating cavity of the housing. With the foregoing housing, the battery in this embodiment of this application can simplify processing technology of the housing, improve size processing accuracy of the housing, and reduce manufacturing costs of the housing, thereby reducing costs of the battery. In addition, energy density of the battery can be improved by reducing a volume occupied by the housing.

According to a third aspect, an embodiment of this application provides an electric device including a device body and the foregoing battery, where the battery is installed in the device body. After being equipped with the foregoing battery, the electric device in this embodiment of this application can simplify processing technology of the housing, improve size processing accuracy of the housing, and reduce manufacturing costs of the housing, thereby reducing costs of the electric device.

Based on the foregoing embodiment of this application, the frame can serve as a supporting body of the housing. After the head end and the tail end of the frame are connected, a hollow structure with two open sides can be formed. The two housing covers are configured to seal two sides of the frame to form a sealed accommodating cavity capable of accommodating the electrode assembly. The frame is formed by sequentially connecting at least one connecting member head to tail, the frame is provided with a pole, and the pole is configured to connect an electrode in the electrode assembly. The frame being fitted with and connected to the housing cover can reduce processing difficulty of the housing, enlarge a processing size range of the housing, and reduce processing costs. Specifically, when the frame is formed by sequentially connecting at least one connecting member head to tail, the connecting member can be processed more precisely, and the frame can be formed only by bending and splicing the connecting member, so that connection size accuracy is controlled more easily in comparison with that of a stamped housing. In addition, no housing in this application needs to be stamped, no special stamping mold is required, and therefore, there is no decrease in size accuracy caused by a decrease in mold precision. After the frame and the housing cover are connected, a corresponding accommodating cavity for installing the electrode assembly can be formed, thereby implementing a simpler structure and easy size control. This embodiment of this application can simplify processing technology of the housing, improve size processing accuracy of the housing, and reduce manufacturing costs of the housing.

### BRIEF DESCRIPTION OF DRAWINGS

To describe the technical solutions in some embodiments of this application or in the prior art more clearly, the following briefly describes the accompanying drawings required for describing said embodiments or the prior art. Apparently, the accompanying drawings in the following description only show some embodiments of this application, and persons skilled in the art may derive other drawings from these accompanying drawings without creative efforts.
FIG. 1 is a schematic exploded view of an arrangement manner in which a frame in a housing includes two connecting members according to an embodiment of this application;
FIG. 2 is a schematic structural diagram of the frame in FIG. 1 according to an embodiment of this application;
FIG. 3 is a schematic exploded view of another arrangement manner in which a frame in a housing includes two connecting members according to an embodiment of this application;
FIG. 4 is a schematic structural diagram of the frame in FIG. 3 according to an embodiment of this application;
FIG. 5 is a schematic structural diagram of an arrangement manner in which a frame in a housing includes one connecting member according to an embodiment of this application;
FIG. 6 is a schematic structural diagram of a frame in an inverted T shape according to an embodiment of this application;
FIG. 7 is a schematic structural diagram of a frame in a shape of a triangle according to an embodiment of this application;
FIG. 8 is a schematic structural diagram of a frame in a shape of a sector according to an embodiment of this application;
FIG. 9 is a schematic structural diagram of a frame in a shape of a circle according to an embodiment of this application;
FIG. 10 is a schematic structural diagram of a frame in a shape of an ellipse according to an embodiment of this application; and
FIG. 11 is a schematic structural diagram of a frame in an irregular shape according to an embodiment of this application.

### Reference signs:

10-frame; 11-connecting member; 11a-first connecting member; 11b-second connecting member; 111-first bending region; 112-second bending region; 113-third bending region; 114-fourth bending region; 115-fifth bending region; 12-pole; 13-splicing region; and 20-housing cover.

### DESCRIPTION OF EMBODIMENTS

To make the objectives, technical solutions, and advantages of this application more comprehensible, the following describes this application in detail with reference to embodiments and accompanying drawings. It should be understood that the specific embodiments described herein are merely used to explain this application rather than to limit this application.

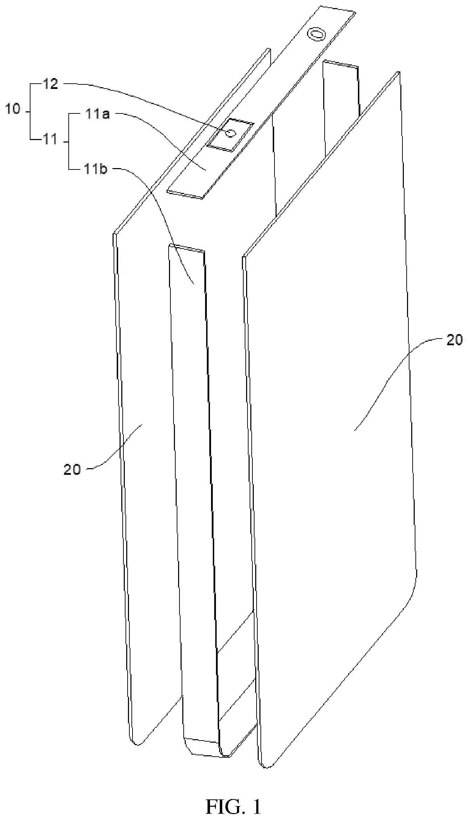

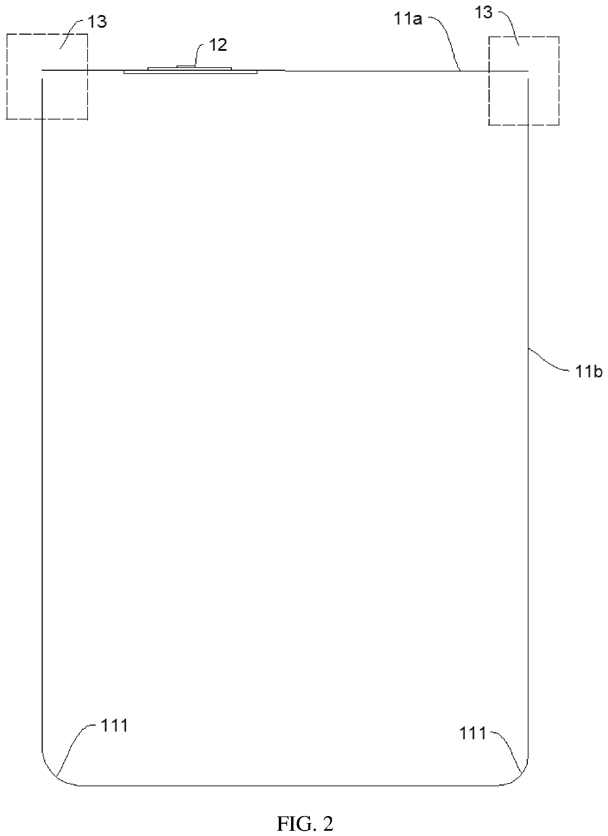

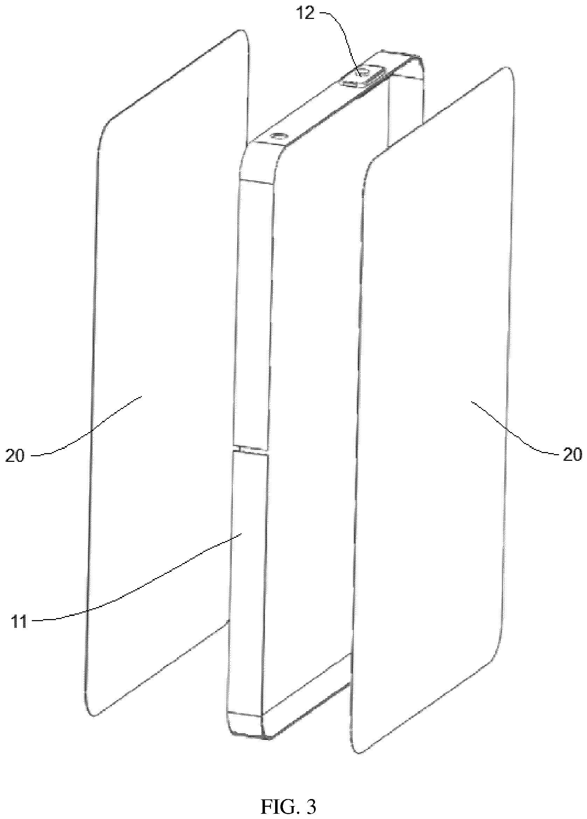

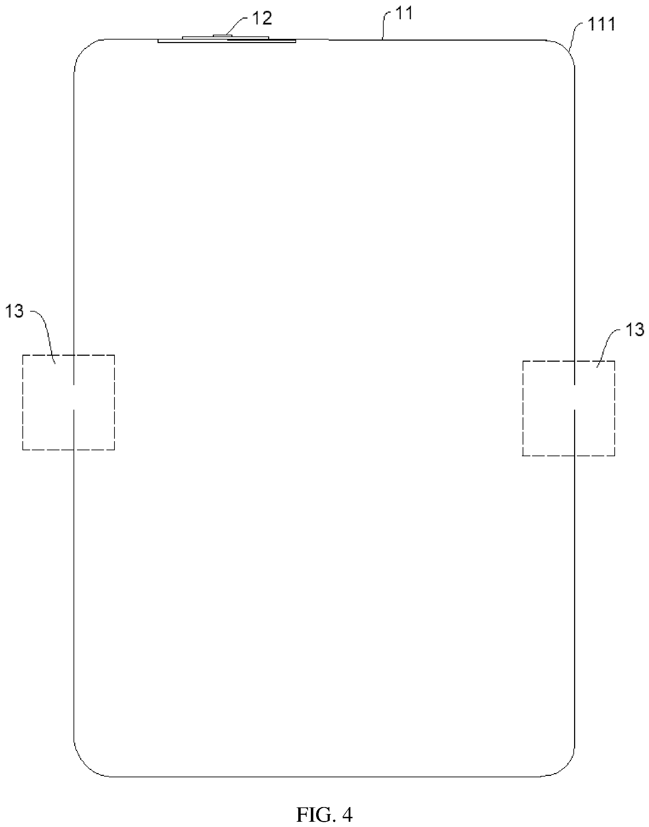

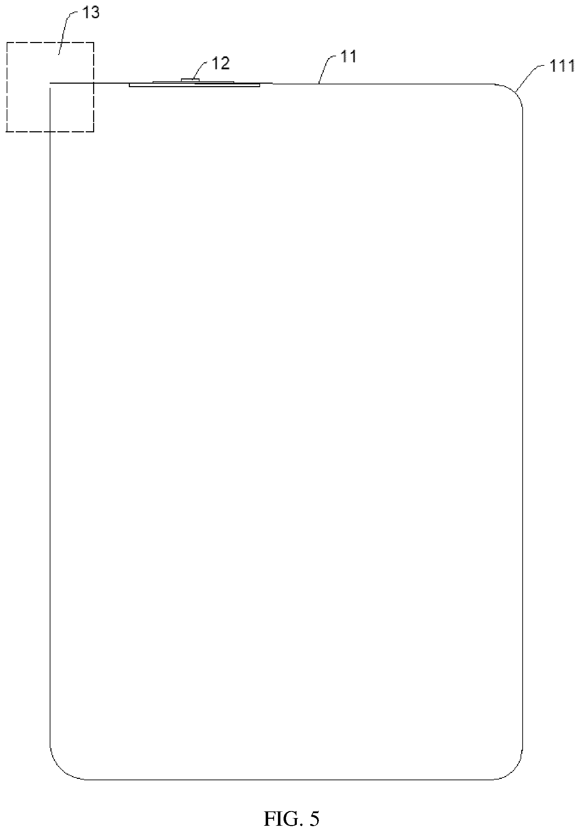

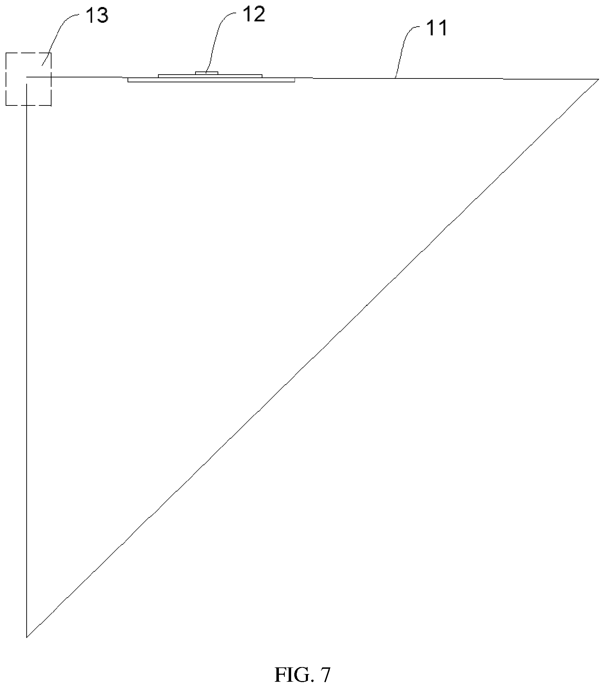

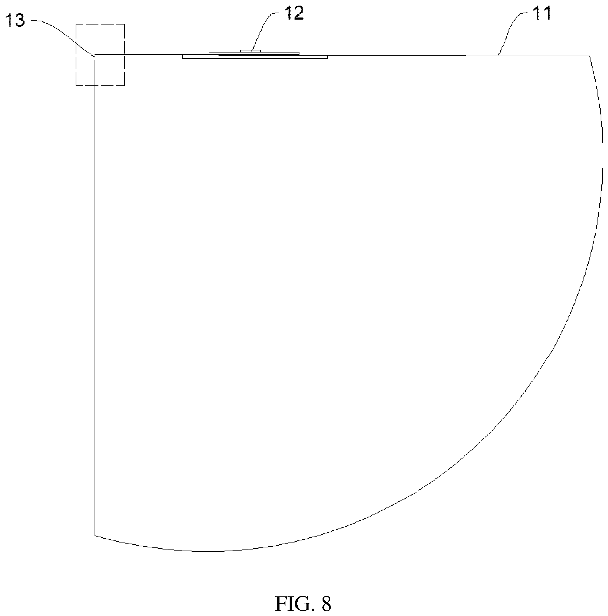

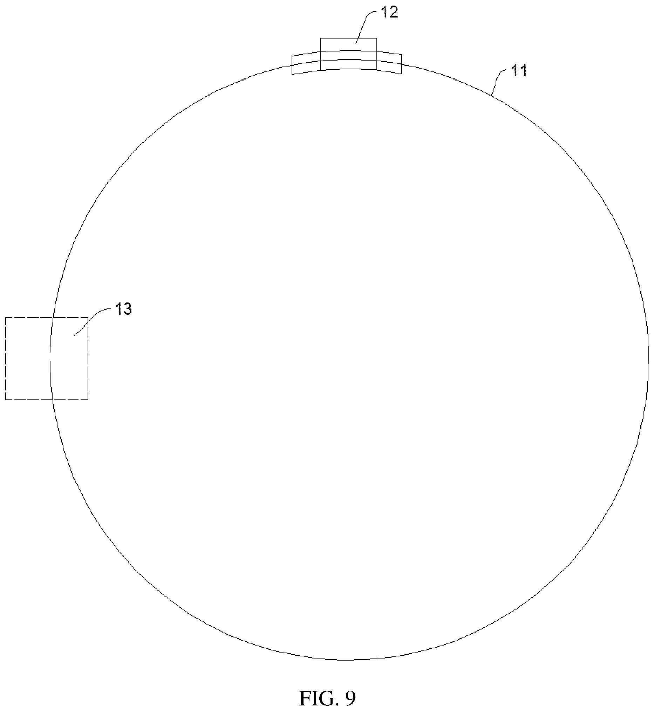

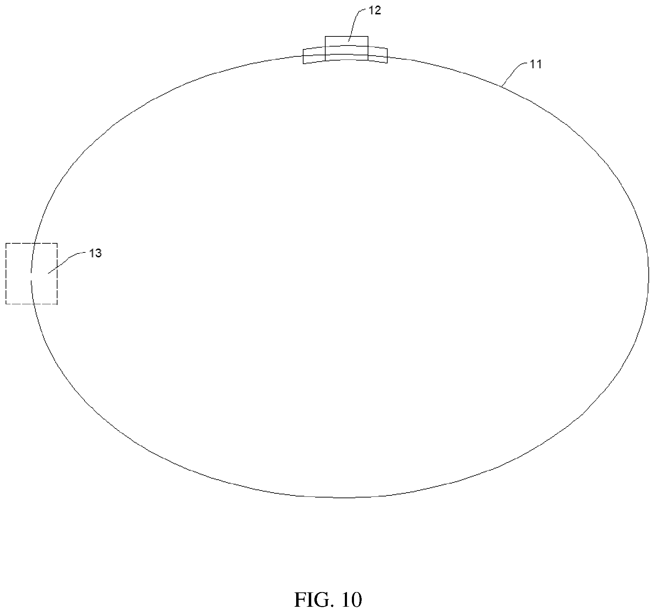

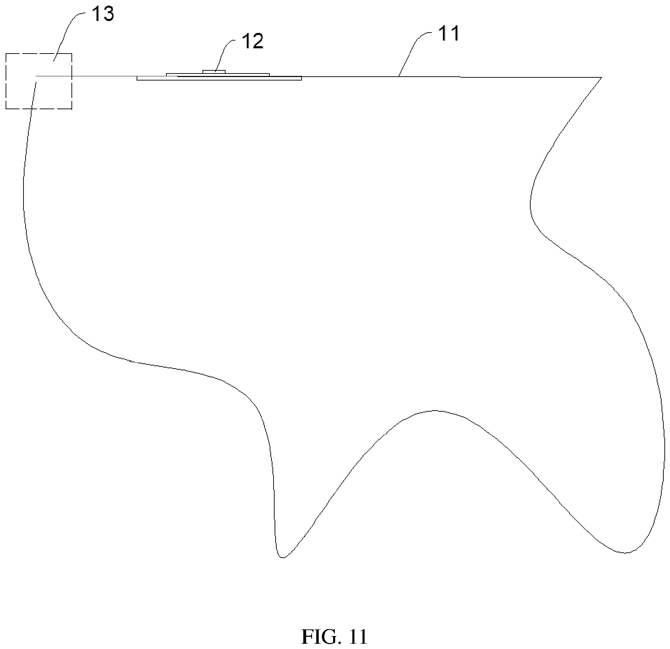

Referring to FIG. 1 to FIG. 11, a first aspect of this application provides a housing, which can simplify processing technology of the housing, improve size processing accuracy of the housing, and reduce manufacturing costs of the housing.

Referring to FIG. 1 to FIG. 5, a housing in some embodiments of this application includes a frame 10 and two housing covers 20. The frame 10 is formed by sequentially connecting at least one connecting member 11 head to tail, where the frame 10 is provided with a pole 12; the two housing covers 20 are respectively connected to two opposite sides of the frame 10; and the frame 10 and the two housing covers 20 form a sealed accommodating cavity for accommodating an electrode assembly (not shown in the figure).

Based on the foregoing embodiment of this application, the frame 10 can serve as a supporting body of the housing. After the head end and the tail end of the frame 10 are connected, a hollow structure with two open sides can be formed. The two housing covers 20 are configured to seal two sides of the frame 10 to form a sealed accommodating cavity capable of accommodating the electrode assembly. The frame 10 is specifically formed by sequentially connecting at least one connecting member 11 head to tail, the frame 10 is provided with a pole 12, and the pole 12 is configured to connect an electrode in the electrode assembly. The frame 10 being fitted with and connected to the housing cover 20 can reduce processing difficulty of the housing, enlarge a processing size range of the housing, and reduce processing costs. Specifically, when the frame 10 is formed by sequentially connecting at least one connecting member 11 head to tail, the connecting member 11 can be processed more precisely, and the frame 10 can be formed only by bending and splicing the connecting member 11, so that connection size accuracy is controlled more easily in comparison with that of a stamped housing. In addition, no housing in this application needs to be stamped, no special stamping mold is required, and therefore, there is no decrease in size accuracy caused by a decrease in mold precision. After the frame 10 and the housing cover 20 are connected, a corresponding accommodating cavity for installing the electrode assembly can be formed, thereby implementing a simpler structure and easy size control. This embodiment of this application can simplify processing technology of the housing, improve size processing accuracy of the housing, and reduce manufacturing costs of the housing.

It should be noted that the housing provided in this application may be a housing that can be bent and spliced. Specifically, the frame 10 is formed by bending, and spliced at a joint in a manner such as welding or binding, and then the housing is finally formed by further splicing the housing cover 20 and the frame 10. Compared with the stamped housing, the housing in this application is characterized by bending, and therefore, is applicable to batteries of different sizes, has a smaller size limit, and is applicable to a larger size range and greater width through bending and tailor welding, thereby implementing a smaller material thickness limit, avoiding a cracking problem during stamping, and implementing simpler proofing and manufacturing, a shorter development cycle, a process simpler than stamping, and lower costs.

In some embodiments of this application, the connecting member 11 is provided in a quantity of one, the connecting member 11 has at least one first bending region 111, and the connecting member 11 is provided with the pole 12.

Based on the foregoing embodiment of this application, when the connecting member 11 is provided in a quantity of one, the frame 10 can be formed by connecting a head end and a tail end of the one connecting member 11. Each first bending region 111 corresponds to one bending position, and after the at least one first bending region 111 is turned, the head end and the tail end of the connecting member 11 can reach positions to be close to each other, so as to be spliced into the frame 10. A splicing manner can be welding, binding, or the like, and the head end and the tail end can also be, for example, clamped by a clip, fastened by a fastener, or hooped by a hoop for connection after being staggered.

It should be noted that a gap (splicing region 13 in a dashed box) in the frame 10 in the diagram of this application represents a splicing position in a drawn schematic diagram. After connection, no gap is present in the frame 10, and the gap can be sealed by connecting a structure such as solder or a bonding piece, or staggering and then splicing ends of the connecting member 11.

In some embodiments of this application, the connecting member 11 has at least one second bending region 112, and the first bending region 111 and the second bending region 112 are respectively arranged on opposite surfaces of the connecting member 11.

Based on the foregoing embodiment of this application, the second bending region 112 is arranged, so that the connecting member 11 can be bent in another direction. Specifically, the first bending region 111 and the second bending region 112 can be respectively arranged on opposite surfaces of the connecting member 11. The first bending region 111 may be specifically bent in a direction leaving a center of the frame 10, and the second bending region 112 may be specifically bent in a direction approaching the center of the frame 10. The structure of the frame 10 can be more diversified through the foregoing arrangement, and a frame 10 in a corresponding shape can be arranged as required, to obtain a housing in the corresponding shape.

In some embodiments of this application, the connecting member 11 is provided in a quantity of two, the frame 10 includes a first connecting member 11a and a second connecting member 11b, and head ends and tail ends of the first connecting member 11a and the second connecting member 11b are sequentially connected to form the frame 10. The first connecting member 11a or the second connecting member 11b is provided with the pole 12, and each of the first connecting member 11a and the second connecting member 11b has at least two first bending regions 111.

Based on the foregoing embodiments of this application, the frame 10 can be formed by splicing the head ends and tail ends of the two connecting members 11. In this way, a shorter single connecting member 11 may be used, further reducing the processing difficulty, and reducing the overall processing costs. For the frame 10 in this application, splicing is not limited to splicing of two connecting members 11, and can also be splicing of three or more connecting members 11. The pole 12 can be arranged on the first connecting member 11a or the second connecting member 11b as required.

After the first connecting member 11a and the second connecting member 11b both have at least two first bending regions 111, the frame 10 can be in a more complex shape. For example, both the first connecting member 11a and the second connecting member 11b have two first bending regions 111, so that the first connecting member 11a and the second connecting member are both of a U-shaped structure; and the two U-shaped structures can be arranged oppositely, and spliced end to end at openings of the U-shaped structures to form the frame 10 in this application.

It should be noted that the connecting member 11 in this application can be first bent by a simple bending mold, and only the splicing region 13 needs to be spliced during assembly of the housing.

In some embodiments of this application, the first connecting member 11a further has at least one second bending region 112, and the first bending region 111 and the second bending region 112 are respectively arranged on opposite surfaces of the first connecting member 11a; and/or the second connecting member 11b further has at least one third bending region 113, and the first bending region 111 and the third bending region 113 are respectively arranged on opposite surfaces of the second connecting member 11b.

Based on the foregoing embodiments of this application, the second bending region 112 can ensure that the first connecting member 11a has a region with a bending direction opposite to that of the first bending region 111, so that the first connecting member 11a can have more varied shapes and be applicable to more electrode assemblies with complex shapes; and the third bending region 113 can ensure that the second connecting member 11b has a region with a bending direction opposite to that of the first bending region 111, so that the second connecting member 11b can have more varied shapes and be applicable to more electrode assemblies with complex shapes.

In some embodiments of this application, the first connecting member 11a further has at least one fourth bending region 114, and the fourth bending region 114 and the second bending region 112 are respectively arranged on opposite surfaces of the first connecting member 11a; and/or the second connecting member 11b further has at least one fifth bending region 115, and the fifth bending region 115 and the third bending region 113 are respectively arranged on opposite surfaces of the second connecting member 11b.

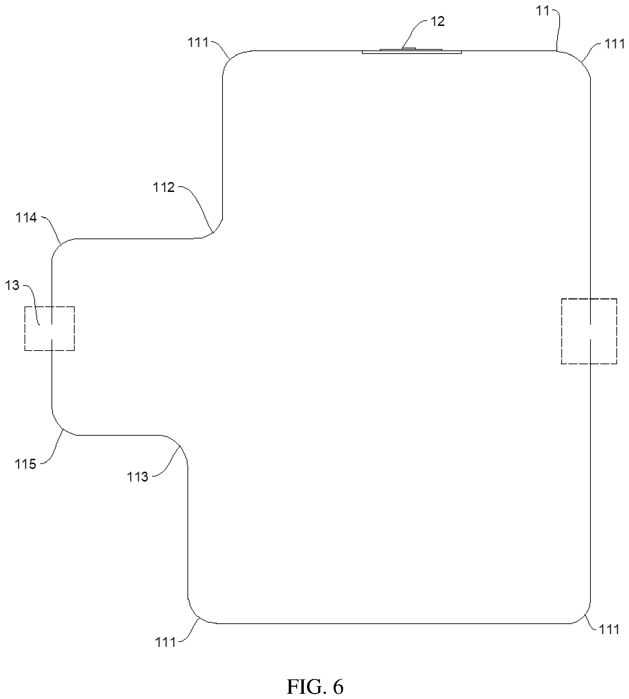

Based on the foregoing embodiments of this application, bending directions of the fourth bending region 114 and the fifth bending region 115 are the same as a bending direction of the first bending region 111, and the fourth bending region 114 and the fifth bending region 115 are arranged, so that the frame 10 can form an inverted T (referring to FIG. 6) or hollowed-out structure.

In some embodiments of this application, at least one of the first bending region 111 to the fifth bending region 115 has one of an acute angle, an obtuse angle, a right angle, or a round corner.

Based on the foregoing embodiments of this application, five bending regions of the first bending region 111 to the fifth bending region 115 may have one bending structure of the acute angle, the obtuse angle, the right angle, or the round corner. That is, the bending structures in the bending regions can be in the foregoing four shapes. The bending structure can also be in a shape of a combination of the foregoing four shapes, for example, a wave shape or a zigzag shape.

It should be noted that the five bending regions of the first bending region 111 to the fifth bending region 115 may have bending structures in totally identical shapes, bending structures in partially identical shapes, or totally different bending structures. When the five bending regions have bending structures in the same shape, the bending structures of the five bending regions can also have the same size, or partially different sizes, or can be specifically adapted based on the shape of the electrode assembly.

Referring to FIG. 6 to FIG. 11, in some embodiments of this application, the frame 10 is in a shape of one of a triangle, a sector, a circle, an ellipse, a regular shape with 4 or more sides, and an irregular shape with 4 or more sides.

Based on the foregoing embodiments of this application, the shape of the frame 10 can define shape of the entire housing. The shape of the frame 10 can be more diversified through the foregoing structure, so that the frame 10 is applicable to electrode assemblies in more complex shapes.

In some embodiments of this application, the connecting member 11 and/or the housing cover 20 is a metal sheet.

Based on the foregoing embodiments of this application, after the metal sheet is configured as the connecting member 11 and/or the housing cover 20, the connecting member 11 of the same thickness can have higher strength. Specifically, the connecting member 11 may be a conventional steel sheet, a stainless steel sheet, an iron sheet, a copper sheet, an alloy sheet, or the like. Certainly, a non-metal sheet with specific strength or a composite sheet formed by combining metal and non-metal can also be set as the connecting member 11 as required. The connecting member 11 and the housing cover 20 may be made of the same material or different materials. For example, the connecting member 11 is a metal sheet, and the housing cover 20 is a non-metal sheet; or the connecting member is a stainless steel sheet, and the housing cover 20 is a copper sheet, and so on. A material is specifically selected as required, provided that the accommodating cavity can be sufficiently sealed.

It should be noted that the connecting member 11 needs to be bent and spliced end to end at a corresponding position, to form the frame 10, or at least two connecting members are spliced end to end to form the corresponding frame 10. After the metal sheet is configured as the connecting member 11 and/or the housing cover 20, better plasticity can be implemented.

In some embodiments of this application, thickness of both the connecting member 11 and the housing cover 20 is greater than or equal to 0.05 mm.

Based on the foregoing embodiments of this application, after the thickness of both the connecting member 11 and the housing cover 20 is greater than or equal to 0.05 mm, the connecting member 11 and the housing cover 20 can have sufficient strength. The connecting member 11 and the housing cover 20 can have the same or different thicknesses. For example, the thicknesses of the connecting member 11 and the housing cover 20 are both 0.05 mm; the thickness of the connecting member 11 is 0.05 mm, and the thickness of the housing cover 20 is 0.06 mm; or the thickness of the connecting member 11 is 0.07 mm, and the thickness of the housing cover 20 is 0.06 mm.

In some embodiments of this application, the frame 10 and the two housing covers 20 are connected and sealed by welding. Welding can enhance connection strength of the frame 10 and the housing cover 20, and therefore, it is easier to achieve a sufficient sealing effect and unlikely to cause a sealing failure. Certainly, the frame 10 and the housing cover 20 in this application can also be connected by a clip, a bonding piece, a hoop, or the like as required, provided that a resulting housing can have required use performance.

According to a second aspect, an embodiment of this application provides a battery including the foregoing housing and an electrode assembly, where the electrode assembly is arranged in an accommodating cavity of the housing.

Based on the foregoing embodiment of this application, the battery having the foregoing housing can simplify processing technology of the housing, improve size processing accuracy of the housing, and reduce manufacturing costs of the housing, thereby reducing costs of the battery. In addition, energy density of the battery can be improved by reducing a volume occupied by the housing. The frame 10 can serve as a supporting body of the housing. After the head end and the tail end of the frame 10 are connected, a hollow structure with two open sides can be formed. The two housing covers 20 are configured to seal two sides of the frame 10 to form a sealed accommodating cavity capable of accommodating the electrode assembly. The frame 10 is specifically formed by sequentially connecting at least one connecting member 11 head to tail, the frame 10 is provided with a pole 12, and the pole 12 is configured to connect an electrode in the electrode assembly. The frame 10 being fitted with and connected to the housing cover 20 can reduce processing difficulty of the housing, enlarge a processing size range of the housing, and reduce processing costs. Specifically, when the frame 10 is formed by sequentially connecting at least one connecting member 11 head to tail, the connecting member 11 can be processed more precisely, and the frame 10 can be formed only by bending and splicing the connecting member 11, so that connection size accuracy is controlled more easily in comparison with that of a stamped housing. In addition, no housing in this application needs to be stamped, no special stamping mold is required, and therefore, there is no decrease in size accuracy caused by a decrease in mold precision. After the frame 10 and the housing cover 20 are connected, a corresponding accommodating cavity for installing the electrode assembly can be formed, thereby implementing a simpler structure and easy size control. This embodiment of this application can simplify processing technology of the housing, improve size processing accuracy of the housing, and reduce manufacturing costs of the housing.

According to a third aspect, an embodiment of this application provides an electric device including a device body and the foregoing battery, where the battery is installed in the device body.

Based on the foregoing embodiment of this application, the electric device having the foregoing battery can simplify processing technology of the housing, improve size processing accuracy of the housing, and reduce manufacturing costs of the housing, thereby reducing costs of the electric device. The frame 10 can serve as a supporting body of the housing. After the head end and the tail end of the frame 10 are connected, a hollow structure with two open sides can be formed. The two housing covers 20 are configured to seal two sides of the frame 10 to form a sealed accommodating cavity capable of accommodating the electrode assembly. The frame 10 is specifically formed by sequentially connecting at least one connecting member 11 head to tail, the frame 10 is provided with a pole 12, and the pole 12 is configured to connect an electrode in the electrode assembly. The frame 10 being fitted with and connected to the housing cover 20 can reduce processing difficulty of the housing, enlarge a processing size range of the housing, and reduce processing costs. Specifically, when the frame 10 is formed by sequentially connecting at least one connecting member 11 head to tail, the connecting member 11 can be processed more precisely, and the frame 10 can be formed only by bending and splicing the connecting member 11, so that connection size accuracy is controlled more easily in comparison with that of a stamped housing. In addition, no housing in this application needs to be stamped, no special stamping mold is required, and therefore, there is no decrease in size accuracy caused by a decrease in mold precision. After the frame 10 and the housing cover 20 are connected, a corresponding accommodating cavity for installing the electrode assembly can be formed, thereby implementing a simpler structure and easy size control. This embodiment of this application can simplify processing technology of the housing, improve size processing accuracy of the housing, and reduce manufacturing costs of the housing.

In the accompanying drawings of embodiments, the same or similar reference signs correspond to the same or similar components. In the descriptions of this application, it should be understood that the orientations or positional relationships indicated by the terms such as "upper", "lower", "left", and "right" are based on the orientations or positional relationships shown in the accompanying drawings. These terms are merely for ease and brevity of description of this application rather than for indicating or implying that the indicated apparatuses or components must be at specific orientations or must be constructed or operated according to specific orientations, and therefore, the terms describing positional relationships in the accompanying drawings are merely for exemplary description, and shall not be understood as a limitation on this patent. Persons of ordinary skill in the art can understand specific meanings of the foregoing terms based on specific situations.

The foregoing descriptions are merely preferred embodiments of this application, but are not intended to limit this application. Any modification, equivalent replacement, or improvement made without departing from the spirit and principle of this application shall fall within the protection scope of this application.

## Claims

1. A housing, wherein the housing comprises:
a frame, formed by sequentially connecting at least one connecting member head to tail, wherein the frame is provided with a pole; and
two housing covers, respectively connected to two opposite sides of the frame, wherein
the frame and the two housing covers form a sealed accommodating cavity for accommodating an electrode assembly.

2. The housing according to claim 1, wherein the connecting member is provided in a quantity of one, the connecting member has at least one first bending region, and the connecting member is provided with the pole.

3. The housing according to claim 2, wherein the connecting member has at least one second bending region, and the first bending region and the second bending region are respectively arranged on opposite surfaces of the connecting member.

4. The housing according to claim 1, wherein the connecting member is provided in a quantity of two, the frame comprises a first connecting member and a second connecting member, and head ends and tail ends of the first connecting member and the second connecting member are sequentially connected to form the frame; and
the first connecting member or the second connecting member is provided with the pole, and each of the first connecting member and the second connecting member has at least two first bending regions.

5. The housing according to claim 4, wherein the first connecting member further has at least one second bending region, and the first bending region and the second bending region are respectively arranged on opposite surfaces of the first connecting member; and/or the second connecting member further has at least one third bending region, and the first bending region and the third bending region are respectively arranged on opposite surfaces of the second connecting member.

6. The housing according to claim 5, wherein the first connecting member further has at least one fourth bending region, and the fourth bending region and the second bending region are respectively arranged on opposite surfaces of the first connecting member; and/or the second connecting member further has at least one fifth bending region, and the fifth bending region and the third bending region are respectively arranged on opposite surfaces of the second connecting member.

7. The housing according to claim 6, wherein at least one of the first bending region to the fifth bending region has one of an acute angle, an obtuse angle, a right angle, or a round corner.

8. The housing according to claim 1, wherein the frame is in a shape of one of a triangle, a sector, a circle, an ellipse, a regular shape with 4 or more sides, and an irregular shape with 4 or more sides.

9. The housing according to claim 1, wherein the connecting member is a metal sheet.

10. The housing according to claim 1, wherein a thickness of both the connecting member and the housing cover is greater than or equal to 0.05 mm.

11. A battery, comprising:
the housing according to any one of claims 1 to 10; and
an electrode assembly, wherein the electrode assembly is arranged in an accommodating cavity of the housing.

12. An electric device, comprising:
a device body; and
the battery according to claim 11, wherein
the battery is installed in the device body.
